# FASCICULE DE BREVET EUROPEEN

(11) **EP 0 903 074 B1**
(45) Date de publication et mention de la délivrance du brevet: **02.01.2004**
(21) Numéro de dépôt: 98440208.1
(22) Date de dépôt: 11.09.1998
(51) Int. Cl.: A01D 34/67, A01D 34/82

(54) **Tondeuse à gazon comportant un dispositif de sécurité prévenant contre l'accès à la lame de coupe en rotation**
Rasenmäher mit Sicherheitsvorrichtung zur Verhinderung von Zugang zum rotierenden Schneidmesser
Lawnmower with a safety device to prevent access to the rotating cutter blade

(30) Priorité: 12.09.1997 FR 9711530; 14.04.1998 FR 9804790
(43) Date de publication de la demande: 24.03.1999
(73) Titulaire: Outils Wolf (Société Anonyme à Directoire et Conseil de Surveillance), 67160 Wissembourg (FR)
(72) Inventeur:
(74) Mandataire: Nuss, Pierre

(56) Documents cités:
- EP-A- 0 114 020
- DE-U- 8 626 525
- FR-A- 2 066 003
- FR-A- 2 078 990
- FR-A- 2 108 720
- FR-A- 2 237 566
- US-A- 3 404 519
- US-A- 3 715 875
- US-A- 3 893 284
- US-A- 4 043 102
- US-A- 4 244 160
- US-A- 4 753 062
- US-A- 4 800 712
- PATENT ABSTRACTS OF JAPAN vol. 017, no. 266 (C-1062), 25 mai 1993 & JP 05 007414 A (YANMAR AGRICULT EQUIP CO LTD), 19 janvier 1993

## Description

La présente invention concerne le domaine de la construction de tondeuses à gazon, en particulier poussées ou autotractées comprenant un dispositif de coupe qui achemine l'herbe coupée à travers un conduit d'éjection dans un réceptacle disposé à l'arrière, et a pour objet une telle tondeuse comportant un dispositif de sécurité prévenant contre l'accès à la lame de coupe en rotation.

Les réceptacles de réception de l'herbe coupée équipant généralement les tondeuses à gazon de ce type sont le plus souvent sous forme d'un panier ou d'un sac rigide ou souple et sont accrochés derrière la tondeuse sur la sortie du conduit d'éjection de l'herbe coupée. Ces paniers ou sacs peuvent présenter une ouverture supérieure facilitant leur vidange et recouverte, pendant la tonte, par un couvercle solidaire de l'arrière de la tondeuse et formant un déflecteur lors d'une tonte sans ramassage de l'herbe.

Cependant, si ces réceptacles de ramassage existant donnent satisfaction en ce qui concerne les capacités de réception de l'herbe coupée, leur manipulation reste relativement pénible, du fait que leur accrochage est effectué sous le guidon, ce qui empêche un accès aisé, ledit guidon étant généralement bloqué dans sa position de service.

En outre, le couvercle-déflecteur prévu au-dessus de la sortie de la conduite d'éjection complique les manoeuvres de décrochage et d'accrochage, en nécessitant son soulèvement ou son maintien manuel pendant lesdites manoeuvres.

Bien que la rotation de la lame de coupe soit subordonnée à une commande de sécurité à action maintenue, le risque de blessure par projections ou introduction accidentelle d'un membre dans la zone de coupe ne peut pas être totalement évité, du fait même que l'actionnement de cette commande est laissée à la décision de l'utilisateur.

On connaît également, par US-A-4 753 062 une tondeuse à gazon munie d'un guidon pivotable et verrouillable et d'un couvercle de panier de réception d'herbe coupée relié audit guidon par un lien, de sorte que ledit couvercle suit ledit guidon dans son mouvement. Par ailleurs, cette tondeuse est pourvue d'un dispositif de sécurité agissant sur le moyen de commande de mise à l'arrêt du moteur et donc de la lame de coupe.

Cependant, ce dispositif de sécurité, qui assure l'arrêt du moteur par mise à la masse de l'allumage peut être mis en défaut à la moindre déconnexion ou rupture d'un conducteur.

La présente invention a pour but de pallier ces inconvénients en proposant une tondeuse à gazon, en particulier poussée ou autotractée, munie d'un guidon, comprenant un dispositif de coupe qui peut assurer le ramassage de l'herbe coupée à travers un conduit d'éjection dans un réceptacle disposé à l'arrière et comportant un dispositif de sécurité prévenant contre l'accès à la lame de coupe en rotation, permettant d'assurer un accrochage et un décrochage faciles du réceptacle de réception de l'herbe coupée et assurant l'utilisateur contre tout risque de blessure pendant ces opérations ou entre ces opérations.

A cet effet, la tondeuse à gazon est définie par la revendication 1.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
la figure 1 est une vue en perspective d'une tondeuse munie du dispositif conforme à l'invention, en position de fonctionnement ;
la figure 2 est une vue partielle en élévation latérale, à plus grande échelle, représentant un premier mode de réalisation du dispositif de sécurité ;
la figure 3 est une vue partielle en élévation latérale de la partie arrière d'une tondeuse équipée du dispositif suivant la figure 2, avec débrayage de la lame de coupe en positions de service et de rabattement vers l'avant du guidon ;
la figure 4 est une vue analogue à celle de la figure 3, la lame de coupe restant embrayée en positions de service et de rabattement vers l'avant du guidon ;

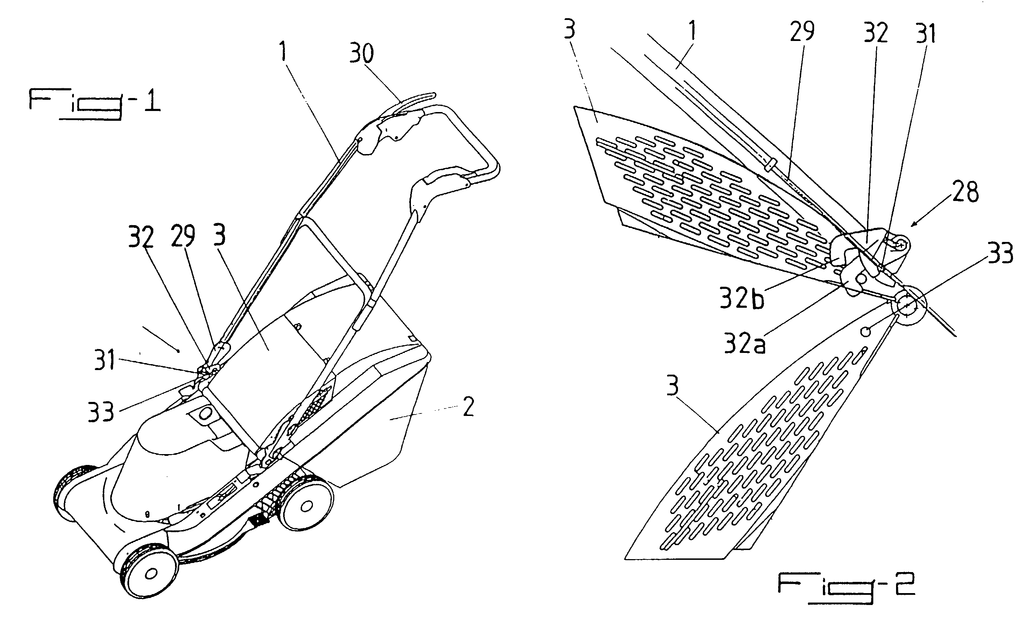

La figure 1 des dessins annexés représente, à titre exemple, une tondeuse à gazon, en particulier poussée ou autotractée, munie d'un guidon 1 et comprenant un dispositif de coupe qui peut assurer le ramassage de l'herbe coupée à travers un conduit d'éjection dans un réceptacle 2 disposé à l'arrière. Cette tondeuse à gazon comporte, par ailleurs, un dispositif de sécurité prévenant contre l'accès à la lame de coupe en rotation. Dans le mode de réalisation représentée, cette tondeuse est du type électrique poussée, mais elle pourrait également être du type autotractée avec moteur électrique ou moteur thermique.

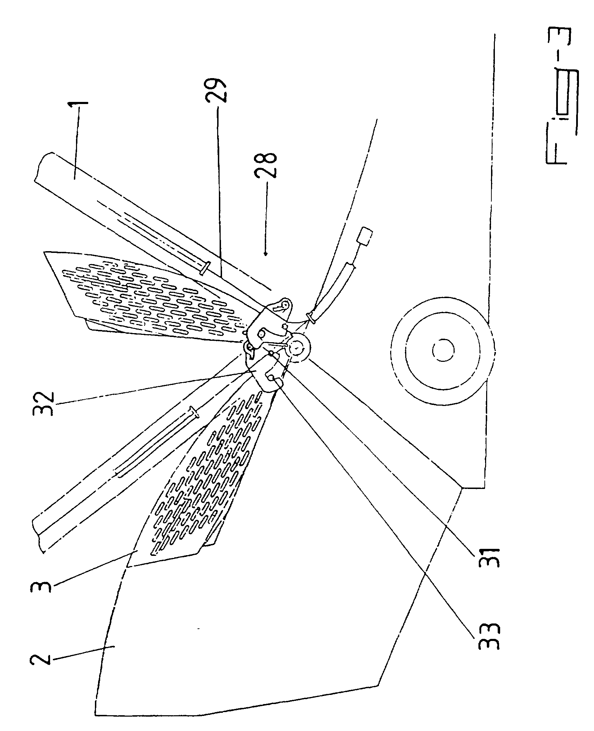

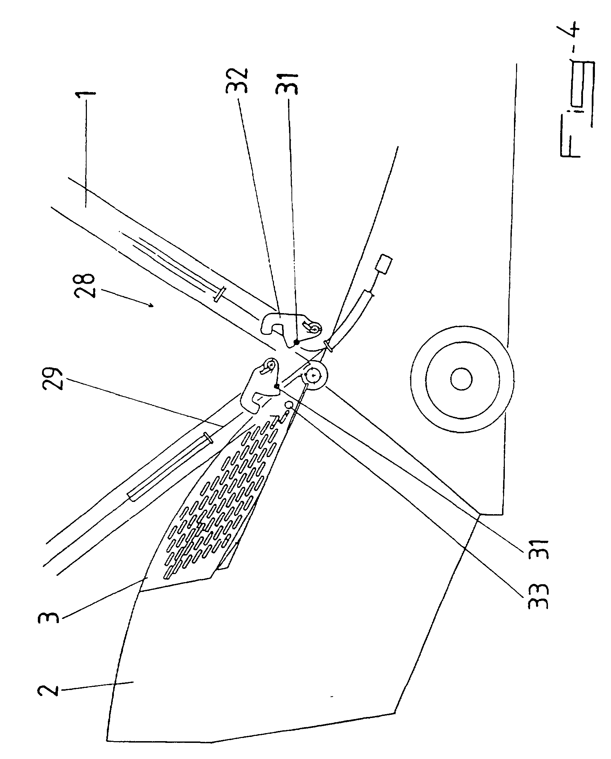

Selon un mode de réalisation de l'invention, plus particulièrement représenté aux figures 1 à 4 des dessins annexés, ce dispositif de sécurité est constitué par un couvercle de sécurité 3 articulé sur la tondeuse, formant déflecteur lors d'une tonte sans ramassage de l'herbe et/ou assurant la fermeture supérieure du réceptacle 2 de réception de l'herbe coupée, solidarisable avec le guidon 1 de la tondeuse, lors du pivotement de ce dernier, et par un moyen 28 de commande du déclenchement ou de l'entraînement en rotation de la lame de coupe.

Le moyen 28 de commande du déclenchement ou de l'entraînement en rotation de la lame de coupe se présente avantageusement sous forme d'un câble 29 de commande à distance agissant sur un frein-moteur, un embrayage-frein ou encore un contacteur électrique d'alimentation et actionné par l'intermédiaire d'un organe de commande à action maintenue 30, tel qu'une poignée, un levier, un arceau ou analogue, prévu sur le guidon 1, ce câble étant muni d'une pièce d'entraînement 31 coopérant avec un crochet 32 monté sur le guidon 1 de manière pivotable contre l'action d'un ressort de rappel (non représenté) et réalisant une solidarisation libérable du couvercle de sécurité 3 par enclenchement avec un pivot ou ergot 33 prévu sur la face correspondante dudit couvercle 3.

Ainsi, lorsque la commande n'est pas actionnée, à savoir, par exemple, lorsque l'utilisateur s'apprête à vidanger le réceptacle 2 de réception de l'herbe coupée, le câble 29 est relâché et l'entraînement de la lame est interrompu. soit par coupure du moteur, soit par interruption de l'entraînement de l'axe de la lame par action sur un frein et/ou un embrayage. Simultanément, le crochet 32 pivote dans sa position 32a représentée à la figure 2, sous l'action du ressort de rappel, position dans laquelle ledit crochet coopère avec l'ergot 33 de la face correspondante du couvercle 3 (figures 2 et 3). Il en résulte que le couvercle 3 est relié au guidon 1 et peut, après déverrouillage de ce dernier, être basculé vers le haut de manière à permettre le dégagement dudit réceptacle 2 de réception de l'herbe coupée.

Dans le cadre de ce basculement, la distance entre les butées de gaines du câble 29 varie d'une longueur x à une longueur x' inférieure à la première correspondant à un mou supplémentaire du câble 29 permettant d'assurer une impossibilité de remise en rotation de la lame de coupe dans la position de basculement avant du guidon 1.

Lors d'un actionnement du moyen de commande 28, le câble 29 est tendu par l'intermédiaire de l'organe de commande à action maintenue 30, ce qui a pour effet de déplacer la pièce d'entraînement 31 contre le crochet 32 monté sur le guidon 1 et de provoquer son pivotement dans une position 32b contre l'action du ressort de rappel et, ainsi. de désolidariser ce dernier du couvercle de sécurité 3 par libération du pivot ou ergot 33 prévu sur la face correspondante dudit couvercle 3. Il s'ensuit que le couvercle 3 est automatiquement libéré pour se positionner sur le réceptacle 2 de réception de l'herbe coupée, lorsque ledit réceptacle est en place, ou devant le conduit d'éjection, en cas d'absence d'un tel réceptacle, de sorte qu'une protection contre les projections est toujours assurée.

Si le guidon 1 devait être pivoté de manière intempestive vers l'avant pendant le fonctionnement de la lame, sans relâchement de l'organe de commande à action maintenue 30, le couvercle de sécurité 3 ne suivrait pas le mouvement dudit guidon 1 et resterait en position de protection au-dessus du réceptacle 2 ou devant le conduit d'éjection. En outre, du fait de la réduction de la distance entre butées de gaine du câble 29 lors de ce pivotement, il se produirait un relâchement de ce dernier ayant pour conséquence un mou suffisant pour assurer une interruption automatique de l'entraînement de la lame par coupure du moteur ou par interruption de l'entraînement de son axe, par action sur un frein et/ou un embrayage.

Par ailleurs, la présence même du crochet fait obstacle à une éventuelle tentative d'ouverture du couvercle de sécurité 3 lorsque le guidon 1 est en position de travail, limitant ainsi le risque de projections vers l'utilisateur.

Grâce à l'invention, il est possible de réaliser un dispositif de sécurité prévenant contre l'accès à la lame de coupe en rotation, pour tondeuses à gazon de type poussées ou autotractées, permettant d'effectuer les manoeuvres d'accrochage et de décrochage du réceptacle de réception de l'herbe coupée uniquement lorsque la lame est arrêtée et donc sans danger pour l'utilisateur. En effet, selon le cas, lors de ces manoeuvres, le dispositif met automatiquement la lame de coupe hors d'action ou empêche la manoeuvre tant que la lame de coupe est maintenue en rotation, de sorte que tout risque de blessure accidentelle par projection ou par pénétration d'un membre dans le champ d'action de ladite lame est évité.

En outre, simultanément à la mise hors d'action de la lame de coupe, l'accès à l'arrière de la tondeuse et les différentes manoeuvres sont grandement facilités.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention, defini par les revendications.

## Revendications

1. Tondeuse à gazon, en particulier poussée ou autotractée, munie d'un guidon (1) et comprenant un dispositif de coupe qui peut assurer le ramassage de l'herbe coupée à travers un conduit d'éjection dans un réceptacle (2) disposé à l'arrière, ainsi qu'un dispositif de sécurité prévenant contre l'accès à la lame de coupe en rotation et constitué par un moyen (28) de commande du déclenchement ou de l'entraînement en rotation de la lame de coupe, **caractérisée en ce que** le moyen (28) de commande du déclenchement ou de l'entraînement en rotation de la lame de coupe se présente sous forme d'un câble (29) de commande à distance agissant sur un frein-moteur, un embrayage-frein ou encore un contacteur électrique d'alimentation et actionné par l'intermédiaire d'un organe de commande à action maintenue (30), tel qu'une poignée, un levier, un arceau ou analogue, prévu sur le guidon (1), ce câble étant muni d'une pièce d'entraînement (31) coopérant avec un crochet (32) monté sur le guidon (1) de manière pivotable contre l'action d'un ressort de rappel et réalisant une solidarisation libérable d'un couvercle de sécurité (3) par enclenchement avec un pivot ou ergot (33) prévu sur la face correspondante dudit couvercle (3), articulé sur la tondeuse.

2. Tondeuse à gazon, suivant la revendication 1, **caractérisée en ce que** le câble (29) est muni de butées de gaines, dont la distance varie d'une longueur x à une longueur x' inférieure à la première correspondant à un mou supplémentaire du câble (29) permettant d'assurer une impossibilité de remise en rotation de la lame de coupe dans la position de basculement avant du guidon (1).

3. Tondeuse à gazon, suivant la revendication 1, **caractérisée en ce que** le couvercle de sécurité (3), assurant la fermeture supérieure du réceptacle (2) de réception de l'herbe coupée, est solidarisable avec le guidon (1) de la tondeuse, lors du pivotement de ce dernier et forme déflecteur lors d'une tonte sans ramassage de l'herbe en coopérant avec le moyen (28) de commande du déclenchement ou de l'entraînement en rotation de la lame de coupe.

4. Tondeuse à gazon, suivant la revendication 1, **caractérisée en ce que** le couvercle de sécurité (3) articulé sur la tondeuse, formant déflecteur lors d'une tonte sans ramassage de l'herbe et/ou assurant la fermeture supérieure du réceptacle (2) de réception de l'herbe coupée coopère avec le moyen (28) de commande du déclenchement ou de l'entraînement en rotation de la lame de coupe pour la mise en place et le dégagement du réceptacle (2) de réception de l'herbe coupée.

## Patentansprüche

1. Rasenmäher, insbesondere geschoben oder selbstfahrend, der mit einem Lenker (1) versehen ist und der eine Schneidvorrichtung, die das Aufsammeln des Mähguts durch einen Auswurfkanal in einen am hinteren Teil angeordneten Sammelbehälter (2) sicherstellen kann, sowie eine Sicherheitsvorrichtung aufweist, welche den Zugang zu dem in Rotation befindlichen Schneidmesser verhindert und von einem Mittel (28) zum Steuern der Auslösung oder des Drehantriebs des Schneidmessers gebildet ist,
**dadurch gekennzeichnet,**
**dass** das Mittel (28) zum Steuern der Auslösung oder des Drehantriebs des Schneidmessers in Form eines Fernbetätigungskabels (29) vorliegt, das auf eine Motorbremse, eine Brems-Kupplung oder aber einen elektrischen Versorgungsschütz wirkt und mittels eines an dem Lenker (1) vorgesehenen, gehalten wirkenden Steuerorgans (30), wie zum Beispiel eines Griffs, eines Hebels, eines kleinen Bogens oder ähnlichem, betätigt wird, wobei dieses Kabel mit einem Antriebsteil (31) versehen ist, das mit einem Haken (32) zusammenwirkt, welcher an dem Lenker (1) schwenkbar entgegen der Wirkung einer Rückstellfeder angebracht ist und durch Verrasten mit einem Zapfen oder Nocken (33) eine lösbare feste Verbindung eines Sicherheitsdeckels (3) herstellt, wobei der Zapfen oder Nocken an der entsprechenden Seite des an dem Mäher angelenkten Deckels (3) vorgesehen ist.

2. Rasenmäher nach Anspruch 1,
**dadurch gekennzeichnet,**
**dass** das Kabel (29) mit Mantelanschlägen versehen ist, deren Abstand von einer Länge x bis zu einer geringeren Länge x' variiert, die einer zusätzlichen Lose des Kabels (29) entspricht, wodurch es möglich ist, zu gewährleisten, dass das Schneidmesser in der vorgeschwenkten Stellung des Lenkers (1) unmöglich wieder in Rotation versetzt werden kann.

3. Rasenmäher nach Anspruch 1,
**dadurch gekennzeichnet,**
**dass** der Sicherheitsdeckel (3) - welcher sicherstellt, dass der Sammelbehälter (2) zur Aufnahme des Mähguts oben verschlossen ist - mit dem Lenker (1) des Mähers bei Verschwenken des Lenkers fest verbindbar ist und bei einem Mähen ohne Aufsammeln des Grases ein Ablenkblech bildet, indem er mit dem Mittel (28) zum Steuern der Auslösung oder des Drehantriebs des Schneidmessers zusammenwirkt.

4. Rasenmäher nach Anspruch 1,
**dadurch gekennzeichnet,**
**dass** der an dem Mäher angelenkte Sicherheitsdeckel (3), welcher bei einem Mähen ohne Aufsammeln des Grases ein Ablenkblech bildet und/oder sicherstellt, dass der Sammelbehälter (2) zur Aufnahme des Mähguts oben verschlossen ist, für das Anbringen und das Abnehmen des Sammelbehälters (2) zur Aufnahme des Mähguts mit dem Mittel (28) zur Steuerung der Auslösung oder des Drehantriebs des Schneidmessers zusammenwirkt.

## Claims

1. Lawn mower, in particular a pushed or self-propelling mower, fitted with a steering handle-bar (1) and comprising a cutting device which can ensure the collection of the cut grass through an ejection duct into a receptacle (2) arranged at the rear, and a safety device which prevents access to the rotating cutting blade and which consists of a means (28) for controlling the starting or driving in rotation of the cutting blade,
**characterised in that**
the control means (28) for starting or driving the cutting blade in rotation takes the form of a remote control cable (29) which acts upon a motor brake, a clutch brake or an electric power-feed contact and is actuated via a sustained-action control element (30), such as a handle, lever, arch or similar, fitted on the handle-bar (1), this cable being provided with a carrier component (31) that cooperates with a hook (32) mounted on the handle-bar (1) so that it can pivot against the force of a restoring spring and brings about a detachable connection of a safety cover (3) by engagement with a pivot or lug (33) provided on the corresponding face of the said cover (3), articulated to the mower.

2. Lawn mower according to Claim 1,
**characterised in that**
the cable (29) is fitted with sheath abutments whose distance varies between a length x and a length x' smaller than the first length corresponding to a supplementary slack of the cable (29) which makes it possible to ensure the impossibility of resuming the rotation of the cutting blade when the handle-bar (1) is in its tilted forward position.

3. Lawn mower according to Claim 1,
**characterised in that**
the safety cover (3), which closes off the cut grass receptacle (2) at the top, can be attached to the handle-bar (1) of the mower during the pivoting of the latter and forms a deflector during a cutting operation without collection of the cut grass by cooperating with the means (28) for controlling the starting or driving in rotation of the cutting blade.

4. Lawn mower according to Claim 1,
**characterised in that**
the safety cover (3) articulated to the mower, which forms a deflector during a cutting operation without collection of the cut grass and/or which ensures the closure of the cut grass receptacle (2) at the top, cooperates with the means (28) for controlling the starting or driving in rotation of the cutting blade to allow the cut grass receptacle (2) to be fitted on or taken off.
